# EUROPEAN PATENT SPECIFICATION

(11) **EP 4 398 151 B1**
(45) Date of publication and mention of the grant of the patent: **18.11.2026**
(21) Application number: 24177742.4
(22) Date of filing: 02.06.2021
(51) Int. Cl.: G06K 19/02, G06K 19/077

(54) **METHOD FOR MANUFACTURING A TAG FOR A TEXTILE**
VERFAHREN ZUR HERSTELLUNG EINES ETIKETTS FÜR EIN TEXTIL
PROCÉDÉ DE FABRICATION D'UNE ÉTIQUETTE POUR UN TEXTILE

(30) Priority: 04.06.2020 IT 202000013294
(43) Date of publication of application: 10.07.2024
(62) Document number(s) of the earlier application(s) in accordance with Art. 76 EPC: 21732983.8 / 4 162 398
(73) Proprietor: Datamars SA, 6814 Lamone (CH)
(72) Inventor: Luca, CEREA, 21100 Varese (IT); Julien, BUROS, 6990 Cassina d'Agno (CH)
(74) Representative: M. Zardi & Co S.A.

(56) References cited:
- EP-A1- 2 772 873
- JP-A- 2013 206 080
- US-A1- 2019 228 280

## Description

### Field of application

The present invention relates to a method for manufacturing a tag for a fabric, in particular, but not exclusively a tag for identification of a garment associated with it, for example for identification of the garment in a laundry.

The present invention also relates to a tag obtained using the aforementioned method, and in particular a tag for fabric, comprising a radio module with a high transmission frequency, a radio-frequency identification integrated circuit connected to the radio module, an antenna, and a substrate for supporting the radio module, the integrated circuit and the antenna.

### Prior art:

Methods for manufacturing a tag for a fabric are known, the tag being of the type intended to be fixed, for example, to a garment (or other fabrics).

The garment must be able to be identified, for example within a laundry, during a washing or treatment process where it is required to be able to identify the owner of the garment, among other things in order to be able to return the garment to the owner, following treatment.

The known tags are designed so that the garment may be identified by means of a contactless reader.

Therefore, the tags generally comprise a package in which a radio module with a high transmission frequency, in particular ultra high frequency (UHF), is embedded in a radio-frequency identification integrated circuit (RFID IC) by means of a manufacturing method performed by microcircuit manufacturing companies. This method involves the application of a protective material on the radio module and on the integrated circuit, already mounted on the radio module, and therefore the formation of a coating which forms the external part of the package.

The package is then integrated with the other components of the tag, by the tag manufacturer, and therefore by a company different from the microcircuit manufacturer.

In particular, the package is fixed, with an antenna, to a substrate, for example textile substrate, which forms a support for the package and the antenna. It is not necessary to provide direct electrical contacts between the components of the package and the antenna, since the latter is inductively coupled with the package.

Fixing of the package onto the textile substrate is performed using a glue or a resin. The antenna may be stitched to the substrate or lies around the package, forming for example a closed ring which surrounds the package.

Although this method is widely used, it has a number of drawbacks.

Firstly, the application of the glue or the resin onto the package results in the accumulation of material (i.e. glue) on the protective material already forming part of the package, something which results in an increase in the size of the tag as a whole, in particular its thickness.

The increase in the dimensions, which per se is undesirable since it makes the tag more visible on the garment, also increases the risk of accidental separation of the package or parts of the antenna from the substrate, owing to the greater resistance of the tag to the bending stress acting on it once it has been fixed to the garment. This limited flexibility also partially negatively affects the flexibility in the garment in the zone where the tag is fixed.

Furthermore, but not in order of importance, the aforementioned method is relatively costly, since it requires a component, the pre-assembled package, which per se is already costly. This is understandable in the light of the packaging process described above.

The technical problem underlying the present invention is that of devising a method for manufacturing a tag for fabric which is able to overcome all the aforementioned drawbacks, providing therefore a tag which is particularly resistant to stresses, has small dimensions, is extremely flexible and more cost-efficient than those which are currently available on the market, thus overcoming all the drawbacks which are currently associated with the known tags.

US20190228280A1 and JP2013206080A are examples of methods for manufacturing a tag.

### Brief description of the attached figure

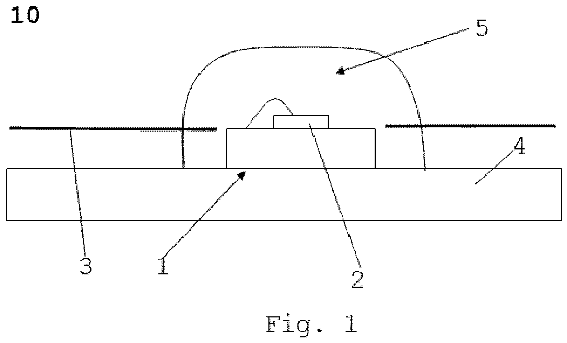

Figure 1 shows in schematic form a tag for a fabric according to the present invention.

### Summary of the invention

A method for manufacturing a tag for RFID tracking of a fabric according to the present invention is claimed in claim 1.

Preferred embodiments of the method for manufacturing the tag are claimed in claims from 2 to 7.

A tag according to the present invention is claimed in claim 8.

It is disclosed mounting, on a substrate of a tag, in particular a textile substrate, or tag for a fabric, a radio module and an integrated circuit associated with it, and of protecting the electrical and structural connection between the module and circuit by means of the same material used to fix the module and the integrated circuit to the textile substrate.

The radio module and the integrated circuit are not incorporated by means of a protective material which forms a package and are, so to speak, "bare", i.e. the electric tracks interconnecting the module and the circuit externally are exposed, before the method for fixing the module and the integrated circuit to the textile substrate is performed.

It is the method itself for fixing the module and the circuit to the substrate which also performs coating of the electric tracks, thus providing with a single material and same procedural step the protection of the electrical contacts (tracks) between the module and the circuit, and the stable positioning of the module and the circuit on the substrate.

This procedural step also comprises the partial coating of the tag antenna, in the area of the substrate immediately surrounding the module and the circuit, thus ensuring also the positioning of the antenna relative to the module and the circuit.

The tag is formed directly on a fabric. The term "support substrate", therefore, may be understood as meaning a textile support, i.e. without the use of other materials, for example plastic materials.

Mounting of the antenna on the textile support may be performed separately from mounting of the radio module and the integrated circuit on the fabric.

The radio module and the integrated circuit are already connected together by means of "flip chip" or "wire bonding" technology before being mounted on the textile support. However, before being mounted on the textile support, the radio module and the integrated circuit are not connected to a long-range antenna. This connection with the antenna is performed directly on the textile support where the antenna may be stitched, forming a ring inside which the radio module and the integrated circuit are then positioned and retained in this position by a glue or a resin, which also provides a local protective coating. The textile support with the antenna, the radio module and the integrated circuit is then intended to be mounted on the fabric to be tracked, for example (but not exclusively) on a garment.

The manufacturing method according to the prior art, instead, involves incorporating all the electronic components necessary for tracking, including the long-range antenna and the microchip, in a so-called "inlay" and associating the inlay with multiple layers, such as an adhesive layer situated underneath the inlay, a silicone layer situated underneath the adhesive layer and a PET layer situated above the inlay, and finally fixing the multilayer structure thus formed to the fabric to be tracked, for example by means of heat welding. The inlay according to the prior art incorporates the chip and the antenna, made of aluminium, copper or silver, and these components may not be applied separately to a textile support (or support made of other material) as is instead envisaged by the present invention.

According to the present invention, by means of innovative method steps, it is not envisaged forming a multilayer structure for the tag. The radio module and the integrated circuit are not incorporated in an inlay and are not structurally associated with a long-range antenna, at least not before coupling with the textile substrate. Instead, they are mounted directly onto the textile substrate; only on the textile substrate are they coated with a local protective coating, in the form of a resin or glue; it is only on the textile substrate that the structural connection between the long-range antenna and the radio module / integrated circuit is performed (using the glue or the resin) and it is only on the textile substrate that the structural connection between radio module / integrated circuit and textile substrate is performed.

In a variation of embodiment of the present invention, the structural connection between the radio module / integrated circuit and the substrate may involve a non-textile substrate. In this case also, however, and as already mentioned above, no inlay or multilayer structure is provided, but instead the radio module and the integrated circuit, which are already structurally connected together, may be mounted on the substrate separately from the antenna.

The protective coating. i.e. the glue or the resin, may not be regarded as being a layer of the tag, since it affects only the radio module, the integrated circuit and the surface immediately surrounding them, namely without coating or being extended over other parts of the substrate.

The order of superimposition of the radio module and the integrated circuit with respect to the textile layer is not limiting for the invention. Preferably, the radio module is in direct contact with the textile substrate, and the integrated circuit is situated above the radio module, without being in direct contact with the textile substrate. It is possible, however, for there to be direct contact between the integrated circuit and the textile substrate and for the radio module to be situated above the integrated circuit, without being able to make direct contact with the textile substrate.

The following points should be noted:
The support substrate according to the present invention is preferably a textile substrate. The aforementioned material is not limiting.

The tag is formed directly on the textile substrate.

The fabric to be tracked may be fixed to the tag by means of stitching of the fabrics (i.e. fabric of the textile substrate of the tag and fabric of the garment to be tracked). Such a fixing method is not limiting.

The protective coating, for example the resin, comes into direct contact with the radio module, the integrated circuit and the support substrate, only in the area around the radio module and the integrated circuit, without covering other parts of the substrate.

### Detailed description of the invention

With reference to Figure 1, below a method for manufacturing a tag 10 for a fabric is described, in particular but not exclusively a tag 10 for identification of a garment (not shown in the figures) intended to be associated with it, for example for identification in a laundry.

The tag 10 comprises:
- a radio module with an ultra high transmission frequency (UHF), denoted by 1;
- a radio-frequency identification integrated circuit (RFID IC), denoted by 2, connected to the UHF radio module 1;
- an antenna 3; and
- a textile substrate 4 for supporting the UHF radio module 1, the RFID integrated circuit 2 and the antenna 3.

The method comprises the steps of:
- mounting the UHF radio module 1 and the RFID integrated circuit 2 on the substrate 4, these being already connected together by means of metal tracks; and
- mounting the antenna 3 on the substrate 4, around the UHF radio module 1 and the RFID integrated circuit 2.

The method includes:
- applying a protective coating 5 onto the UHF radio module 1 and onto the RFID integrated circuit 2, said step of applying the protective coating 5 comprising:
   - coating the metal tracks for electrical connection between the RFID integrated circuit 2 and a UHF module 1, so as to protect the electric interconnection between the RFID integrated circuit 2 and the UHF radio module 1 and further comprising:
      - coating a surface portion of the substrate 4 situated around the UHF radio module 1 and the RFID integrated circuit 2, so as to protect the structural interconnection between the UHF radio module 1 and the substrate 4 and so as to keep the UHF radio module 1 and the RFID integrated circuit 2 in a fixed position on the substrate 4.

The step of applying the protective coating 5 further comprises:
- coating a portion of the antenna 3 situated on the surface portion of the substrate 3, in order to protect the structural connection between the antenna 3 and the substrate 4. More particularly, the step of applying the protective coating 5 further comprises:
   - total incorporation of the RIFD integrated circuit 2 and the UHF radio module 1 in the protective coating 5 above the substrate 4.

Specifically, the step of applying the protective coating 5 comprises, for example:
- pouring a resin or a glue and
- a step for solidification of the resin or glue.

The protective coating 5 becomes rigid at the end of the solidification step.

Advantageously, the antenna portion intended to be coated by the protective coating 5 forms a shoulder for containing the coating 5, for example the glue or the resin, therefore preventing dispersion thereof in areas of the substrate relatively far from the UHF radio module 1 and from the RFID integrated circuit 2, thus allowing the entire predefined amount of protective coating 5 to be used in the areas to be protected. Moreover, the antenna portion intended for the coating increases the adhesion of the protective coating material.

However, according to embodiments not claimed in the present invention, the protective coating 5 may be formed by means of another covering material (namely without using glue or resin), for example, but not exclusively, a covering material which does not require any solidification step in order to become rigid.

It should be pointed out that the term "protective coating 5" used in the present invention does not indicate necessarily a coating which adheres perfectly to the UHF radio module 1 and the RFID integrated circuit 2, as in the case of a glue or resin, but may also indicate a covering of said UHF radio module 1 and RFID integrated circuit 2 which is, at least partly, not in contact with the UHF radio module 1 and the RFID integrated circuit 2, and also not in direct with the metal tracks for electrical connection thereof, or at least not in contact along the entire length of the metal tracks, but which is nevertheless designed to protect the electrical connection thereof with the UHF radio module 1 and the RFID integrated circuit 2 and to cover at least a surface portion of the substrate 4 situated around the UHF radio module 1 and the RFID integrated circuit 2, so as to protect also the structural interconnection between the UHF radio module 1 and the substrate 4 and keep the UHF radio module 1 and the RFID integrated circuit 2 in a fixed position on the substrate 4.

The antenna 3 is preferably a wire, in particular a metal wire, and the step of mounting the antenna 3 on the substrate 4 comprises stitching the antenna 3 onto the textile substrate 4.

The antenna is stitched at a predetermined distance from the RIFD integrated circuit 2 and the UHF radio module 1 and forms a - preferably closed - ring for inductive coupling with the UHF radio module 1. The antenna extends over the substrate beyond the ring, for example in opposite directions with respect to the module, forming preferably turns or sinusoidal loops.

The UHF radio module 1 comprises a PCB (printed circuit board) which incorporates metal tracks intended to act as a short-range inductor.

The RFID integrated circuit 2 is already electrically connected to the metal tracks of the UHF radio module 1 before the step of mounting the UHF radio module 1 and the RFID integrated circuit 2 on the substrate 4, said metal tracks however being exposed or not coated with any resin before the step of mounting the UHF radio module 1 and the RFID integrated circuit 2.

Advantageously, the tag thus formed:
- is particularly flexible;
- rigidly fixes the module, the circuit and the antenna on the substrate;
- is particularly thin;
- is particularly cost-efficient.

## Claims

1. Method for manufacturing a tag for RFID tracking of a fabric, the tag comprising:
- a radio module (1), with an ultra-high transmission frequency (UHF);
- a radio-frequency identification integrated circuit (2) electrically connected to the radio module (1);
- an antenna (3); and
- a substrate (4) supporting the radio module (1), the radio-frequency identification integrated circuit (2) and the antenna (3),
the method comprising the steps of:
- mounting the radio module (1) electrically connected to the radio-frequency identification integrated circuit (2) on the substrate (4),
- mounting the antenna (3) on the substrate (4), around the radio module (1) and the radio-frequency identification integrated circuit (2),
- applying a protective coating (5) onto the radio module (1) and onto the radio-frequency identification integrated circuit (2), said step of applying the protective coating (5) comprising:
- coating the radio module (1) and the radio-frequency identification integrated circuit (2) with a glue or resin,
wherein said glue or resin coats
- a surface portion of the substrate (4) situated around the radio module (1) and the radio-frequency identification integrated circuit (2), so as to protect the structural interconnection between the radio module (1) and the substrate (4) and keep the radio module (1) and the radio-frequency identification integrated circuit (2) in a fixed position on the substrate (4),
**characterized in that** said glue or resin coats
- a portion of the antenna (3) situated on said surface portion of the substrate (4), so as to protect the structural interconnection between the antenna (3) and the substrate (4).

2. Method for manufacturing a tag according to claim 1, **characterized in that** said step of applying the protective coating (5) further comprises:
- total incorporation of the radio-frequency identification integrated circuit (2) and the radio module (1) in the protective coating (5).

3. Method for manufacturing a tag according to claim 1, **characterized in that** said step of applying the protective coating (5) comprises:
- a step for pouring the resin or the glue and
- step for solidification of the resin or glue.
Said protective coating (5) being rigid at the end of the said solidification step.

4. Method for manufacturing a tag according to claim 1, **characterized in that** said antenna (3) is a wire and said step of mounting the antenna (3) on the substrate (4) comprises stitching the antenna (3) onto the substrate (4).

5. Method for manufacturing a tag according to claim 4, **characterized in that** said antenna is stitched at a predetermined distance from the radio-frequency identification integrated circuit (2) and the radio module (1) and forms a - preferably closed - ring for inductive coupling with the radio module (1).

6. Method for manufacturing a tag according to claim 1, **characterized in that** the radio module (1) comprises a printed circuit board (PCB) which incorporates metal tracks intended to act as a short-range inductor.

7. Method for manufacturing the tag according to claim 6, wherein:
- the radio module (1) and the radio-frequency identification integrated circuit (2) are not inserted in a layer or in a multi-layer structure.

8. Tag for a fabric **characterized in that** it is made by means of the method according to one of claims 1 to 7.

## Patentansprüche

1. Verfahren zur Herstellung eines Etiketts zur RFID-Nachverfolgung eines Textils, wobei das Etikett umfasst:
- ein Funkmodul (1) mit einer ultrahohen Übertragungsfrequenz (UHF);
- eine integrierte Radiofrequenz-Identifikationsschaltung (2), die elektrisch mit dem Funkmodul (1) verbunden ist;
- eine Antenne (3); und
- ein Substrat (4), das das Funkmodul (1), die integrierte Radiofrequenz-Identifikationsschaltung (2) und die Antenne (3) trägt,
wobei das Verfahren die Schritte umfasst:
- Montieren des Funkmoduls (1), das elektrisch mit der integrierten Radiofrequenz-Identifikationsschaltung (2) verbunden ist, auf dem Substrat (4),
- Montieren der Antenne (3) auf dem Substrat (4), um das Funkmodul (1) und die integrierte Radiofrequenz-Identifikationsschaltung (2) herum,
- Aufbringen einer Schutzbeschichtung (5) auf das Funkmodul (1) und auf die integrierte Radiofrequenz-Identifikationsschaltung (2), wobei der genannte Schritt des Aufbringens der Schutzbeschichtung (5) umfasst:
- Beschichten des Funkmoduls (1) und der integrierten Radiofrequenz-Identifikationsschaltung (2) mit einem Klebstoff oder Harz,
wobei der genannte Klebstoff oder das genannte Harz
- einen Oberflächenabschnitt des Substrats (4) bedeckt, der um das Funkmodul (1) und die integrierte Radiofrequenz-Identifikationsschaltung (2) herum angeordnet ist, um die strukturelle Verbindung zwischen dem Funkmodul (1) und dem Substrat (4) zu schützen und das Funkmodul (1) und die integrierte Radiofrequenz-Identifikationsschaltung (2) in einer festen Position auf dem Substrat (4) zu halten,
**dadurch gekennzeichnet, dass** der genannte Klebstoff oder das genannte Harz
- einen Abschnitt der Antenne (3) bedeckt, der auf dem genannten Oberflächenabschnitt des Substrats (4) angeordnet ist, um die strukturelle Verbindung zwischen der Antenne (3) und dem Substrat (4) zu schützen.

2. Verfahren zur Herstellung eines Etiketts nach Anspruch 1, **dadurch gekennzeichnet, dass** der genannte Schritt des Aufbringens der Schutzbeschichtung (5) ferner umfasst:
- vollständiges Einbetten der integrierten Radiofrequenz-Identifikationsschaltung (2) und des Funkmoduls (1) in die Schutzbeschichtung (5).

3. Verfahren zur Herstellung eines Etiketts nach Anspruch 1, **dadurch gekennzeichnet, dass** der genannte Schritt des Aufbringens der Schutzbeschichtung (5) umfasst:
- einen Schritt zum Gießen des Harzes oder des Klebstoffs und
- einen Schritt zur Verfestigung des Harzes oder Klebstoffs,
wobei die genannte Schutzbeschichtung (5) am Ende des genannten Verfestigungsschritts starr ist.

4. Verfahren zur Herstellung eines Etiketts nach Anspruch 1, **dadurch gekennzeichnet, dass** die genannte Antenne (3) ein Draht ist und der genannte Schritt des Montierens der Antenne (3) auf dem Substrat (4) ein Aufnähen der Antenne (3) auf das Substrat (4) umfasst.

5. Verfahren zur Herstellung eines Etiketts nach Anspruch 4, **dadurch gekennzeichnet, dass** die genannte Antenne in einem vorbestimmten Abstand von der integrierten Radiofrequenz-Identifikationsschaltung (2) und dem Funkmodul (1) aufgenäht ist und einen - vorzugsweise geschlossenen - Ring zur induktiven Kopplung mit dem Funkmodul (1) bildet.

6. Verfahren zur Herstellung eines Etiketts nach Anspruch 1, **dadurch gekennzeichnet, dass** das Funkmodul (1) eine Leiterplatte (PCB) umfasst, die Metallbahnen enthält, die dazu vorgesehen sind, als Nahbereichsinduktor zu wirken.

7. Verfahren zur Herstellung des Etiketts nach Anspruch 6, wobei:
- das Funkmodul (1) und die integrierte Radiofrequenz-Identifikationsschaltung (2) nicht in eine Lage oder in eine Mehrlagenstruktur eingesetzt sind.

8. Etikett für ein Textil, **dadurch gekennzeichnet, dass** es mittels des Verfahrens nach einem der Ansprüche 1 bis 7 hergestellt ist.

## Revendications

1. Procédé de fabrication d'une étiquette pour le suivi RFID d'un textile, l'étiquette comprenant :
- un module radio (1) à fréquence de transmission ultra-haute (UHF) ;
- un circuit intégré d'identification par radiofréquence (2) connecté électriquement au module radio (1) ;
- une antenne (3) ; et
- un substrat (4) supportant le module radio (1), le circuit intégré d'identification par radiofréquence (2) et l'antenne (3),
- le procédé comprenant les étapes consistant à :
- monter, sur le substrat (4), le module radio (1) connecté électriquement au circuit intégré d'identification par radiofréquence (2),
- monter l'antenne (3) sur le substrat (4), autour du module radio (1) et du circuit intégré d'identification par radiofréquence (2),
- appliquer un revêtement protecteur (5) sur le module radio (1) et sur le circuit intégré d'identification par radiofréquence (2), ladite étape d'application du revêtement protecteur (5) comprenant :
- recouvrir le module radio (1) et le circuit intégré d'identification par radiofréquence (2) d'une colle ou d'une résine,
dans lequel ladite colle ou résine recouvre
- une portion de surface du substrat (4) située autour du module radio (1) et du circuit intégré d'identification par radiofréquence (2), de manière à protéger l'interconnexion structurelle entre le module radio (1) et le substrat (4) et à maintenir le module radio (1) et le circuit intégré d'identification par radiofréquence (2) dans une position fixe sur le substrat (4),
**caractérisé en ce que** ladite colle ou résine recouvre
- une portion de l'antenne (3) située sur ladite portion de surface du substrat (4), de manière à protéger l'interconnexion structurelle entre l'antenne (3) et le substrat (4).

2. Procédé de fabrication d'une étiquette selon la revendication 1, **caractérisé en ce que** ladite étape d'application du revêtement protecteur (5) comprend en outre :
- l'incorporation entière du circuit intégré d'identification par radiofréquence (2) et du module radio (1) dans le revêtement protecteur (5).

3. Procédé de fabrication d'une étiquette selon la revendication 1, **caractérisé en ce que** ladite étape d'application du revêtement protecteur (5) comprend :
- une étape de coulage de la résine ou de la colle et
- une étape de solidification de la résine ou de la colle.
Ledit revêtement protecteur (5) étant rigide à l'issue de ladite étape de solidification.

4. Procédé de fabrication d'une étiquette selon la revendication 1, **caractérisé en ce que** ladite antenne (3) est un fil et ladite étape de montage de l'antenne (3) sur le substrat (4) comprend le fait de coudre l'antenne (3) sur le substrat (4).

5. Procédé de fabrication d'une étiquette selon la revendication 4, **caractérisé en ce que** ladite antenne est cousue à une distance prédéterminée du circuit intégré d'identification par radiofréquence (2) et du module radio (1) et forme un anneau - de préférence fermé - pour un couplage inductif avec le module radio (1).

6. Procédé de fabrication d'une étiquette selon la revendication 1, **caractérisé en ce que** le module radio (1) comprend une carte de circuit imprimé (PCB) qui incorpore des pistes métalliques destinées à faire office d'inducteur à courte portée.

7. Procédé de fabrication de l'étiquette selon la revendication 6, dans lequel :
- le module radio (1) et le circuit intégré d'identification par radiofréquence (2) ne sont pas insérés dans une couche ou dans une structure multicouche.

8. Étiquette pour un textile, **caractérisée en ce qu'**elle est fabriquée au moyen du procédé selon l'une des revendications 1 à 7.
